# FASCICULE DE BREVET EUROPEEN

(11) **EP 3 938 181 B1**
(45) Date de publication et mention de la délivrance du brevet: **16.04.2025**
(21) Numéro de dépôt: 20726193.4
(22) Date de dépôt: 13.03.2020
(51) Int. Cl.: B29C 64/357, B29C 64/153, B33Y 70/00, B33Y 10/00, B33Y 40/00

(54) **PROCÉDÉ DE FABRICATION ADDITIVE PAR FRITTAGE DE POUDRES À BASE DE POLY-ARYL-ÉTHER-CÉTONE EN PARTIE RECYCLÉE**
VERFAHREN ZUR ADDITIVEN FERTIGUNG DURCH SINTERN VON PULVERN, DIE TEILWEISE AUF RECYCELTEM POLYARYLETHERKETON BASIEREN
ADDITIVE MANUFACTURING PROCESS BY SINTERING POWDERS PARTLY BASED ON RECYCLED POLY-ARYL ETHER KETONE

(30) Priorité: 15.03.2019 FR 1902658
(43) Date de publication de la demande: 19.01.2022
(73) Titulaire: ARKEMA FRANCE, 92700 Colombes (FR)
(72) Inventeur: LE, Guillaume, 27470 SERQUIGNY (FR); BRULE, Benoît, 27470 SERQUIGNY (FR); CAREMIAUX, Christophe, 27470 SERQUIGNY (FR)
(74) Mandataire: Arkema Patent
(86) Numéro de dépôt international: PCT/FR2020/050535
(87) Numéro de publication internationale: WO 2020/188202

(56) Documents cités:
- WO-A1-2017/116885
- WO-A1-2017/116885
- WO-A1-2018/185440
- WO-A1-2018/185440
- GB-A- 2 536 387
- GB-A- 2 536 387
- US-A1- 2018 208 741
- US-A1- 2018 208 741
- US-A1- 2018 243 979
- US-A1- 2018 243 979

## Description

### Domaine technique

Le domaine technique de l'invention est celui des procédés de frittage par un rayonnement électromagnétique de poudre, notamment les procédés de frittage par laser de poudre.

En particulier, l'invention concerne l'utilisation d'une poudre incluant une composition à base de PAEK(s), la poudre étant au moins en partie recyclée, dans un procédé de frittage par un rayonnement électromagnétique.

Le rayonnement électromagnétique peut être un faisceau laser, dans le cas du frittage laser (souvent dénommé par sa terminologie anglo-saxonne sous le terme : « *laser sintering* »), un rayonnement infrarouge ou un rayonnement UV ou toute autre source de rayonnement. Le terme « frittage » dans la présente description inclut tous ces procédés quel que soit le type de rayonnement.

### Art antérieur

Les poly-aryl-éther-cétones sont des polymères techniques haute performance bien connus. Ils peuvent être utilisés pour des applications contraignantes en température et/ou en contraintes mécaniques, voire chimiques. Ils peuvent également être utilisés pour des applications demandant une excellente résistance au feu et peu d'émission de fumées et autres gaz toxiques. Ils présentent enfin une bonne biocompatibilité. On retrouve ces polymères dans des domaines aussi variés que l'aéronautique et le spatial, les forages off-shore, l'automobile, le ferroviaire, la marine, l'éolien, le sport, le bâtiment, l'électronique ou encore les implants médicaux. Ils peuvent être mis en œuvre par toutes les technologies de mise en œuvre des thermoplastiques, tels que le moulage, la compression, l'extrusion, le filage, le poudrage ou encore le prototypage par frittage.

Dans le cas du frittage de poudre par rayonnement électromagnétique, une grande partie de la poudre n'est pas utilisée lors de la construction d'un objet tridimensionnel. La construction d'un objet tridimensionnel est également désignée en anglais par le terme de : « *run* ». Typiquement, environ 85 à 90 % en poids de la poudre introduite dans la machine de frittage n'est pas touchée par le rayonnement électromagnétique lors d'une construction d'un objet tridimensionnel. Il apparait donc fondamental, pour des raisons économiques, de pouvoir réutiliser cette poudre, c'est-à-dire la recycler, lors de la (des) construction(s) suivante(s).

En général, lors d'une construction par frittage laser, la poudre de PAEK d'une couche en construction est chauffée dans un environnement de construction à une température Tc, dénommée « température de construction ». La température des couches inférieures à la couche en construction peut être égale à Tc dans le cas où l'enceinte est maintenue à une température uniforme. Néanmoins, dans la majorité des cas, la température des couches inférieures à la couche en construction est légèrement inférieure à la température de construction, de l'ordre de quelques degrés à quelques dizaines de degrés. La partie basse de l'environnement de construction peut notamment être régulée en température de sorte que les couches les plus inférieures ne puissent pas refroidir à une température inférieure à une température Tb, dénommée communément « température de fond de bac ». La température de construction, et le cas échéant la température de fond de bac, sont comprises entre la température de transition vitreuse Tg et la température de fusion Tf de la poudre de PAEK.

Ainsi, lors d'une construction par frittage, la poudre environnante, c'est-à-dire la poudre non touchée par le rayonnement électromagnétique, reste plusieurs heures, typiquement 6 heures, voire plusieurs dizaines d'heures selon la complexité de la pièce à construire, à des températures comprises entre la température de transition vitreuse et la température de fusion de la poudre, ce qui peut entrainer une évolution de la structure du polymère constitutif de la poudre avec notamment une augmentation de sa masse moléculaire et une modification de sa couleur.

L'augmentation de masse moléculaire entraine une augmentation de viscosité qui devient un frein à la coalescence entre les grains de poudre au cours des *runs* successifs. Il est alors difficile voire impossible de recycler la poudre car, soit il devient impossible de fritter la poudre, soit les propriétés mécaniques de la pièce tridimensionnelle, obtenue par frittage d'une telle poudre recyclée, s'en trouvent diminuées et sont insuffisantes à cause de la présence par exemple de porosités dans les pièces frittées.

La modification de couleur, notamment son jaunissement, n'est par ailleurs pas souhaitée dans de nombreuses applications industrielles. Or sur des durées longues en présence d'oxygène, les poudres peuvent aussi évoluer en couleur. Il est alors difficile d'obtenir des objets ayant une couleur homogène et uniforme.

Il existe actuellement sur le marché des poudres de PAEK, comme celle commercialisée sous la référence PEEK HP3 par la société EOS, qui peuvent être utilisées en frittage laser. Cependant, ces poudres subissent une dégradation thermique telle dès le premier *run,* notamment une forte augmentation de leur masse moléculaire moyenne, qu'il n'est pas possible de les réutiliser pour une deuxième construction d'un objet tridimensionnel. Par conséquent, la fabrication des objets tridimensionnels par frittage de ces poudres est beaucoup trop coûteuse et ne peut pas être envisagée à l'échelle industrielle.

Le document US2013/0217838 propose une solution pour pouvoir recycler une poudre de PAEK utilisée en frittage laser. Il décrit plus particulièrement la possibilité de recycler une poudre de PEKK, à condition d'augmenter la température de construction de 285°C à 300°C et d'agmenter la puissance du faisceau laser à chaque recyclage de la poudre, lors des *runs* successifs. Ce document décrit en effet que la poudre de PEKK utilisée n'est pas stable en température et que sa température de fusion augmente après sa première utilisation dans un procédé de frittage. Pour pouvoir contrer cette instabilité de la poudre, les paramètres de la machine de frittage sont modifiés. La puissance du faisceau laser, notamment, est augmentée à chaque *run.* Le fait de devoir changer ces paramètres de frittage à chaque *run* ralentit et rend plus difficile la production industrielle. De plus, il apparait difficile de mélanger de la poudre non recyclée avec une poudre recyclée, car les paramètres de construction sont alors complexes à régler. Enfin, le fait de devoir modifier les paramètres à chaque *run,* et notamment d'augmenter la température de construction, entraine une dégradation de la poudre de polymère, si bien que le nombre de recyclages de la poudre reste encore trop limité et il serait économiquement avantageux de pouvoir la recycler davantage.

Le document WO 2017/149233 décrit une poudre de PAEK apte à être utilisée plusieurs fois dans des procédés de frittage grâce à un prétraitement thermique isotherme à une température constante comprise entre 260 et 290 ° C pendant une durée comprise entre 5 minutes et 120 minutes. Le prétraitement thermique isotherme a pour avantage de stabiliser la température de fusion de la poudre et de pouvoir la recycler lorsqu'elle est utilisée en frittage laser au moins sur quelques *runs.* Cette technique ne permet cependant pas de recycler la poudre sur un grand nombre de *runs.* Un autre désavantage est que la poudre jaunit rapidement au fur et à mesure des recyclages par rapport à la couleur de la poudre vierge.

### Problème technique

L'invention a pour but de remédier à au moins un des inconvénients de l'art antérieur.

En particulier, l'invention a pour but de proposer un procédé de fabrication par frittage d'une poudre par un rayonnement électromagnétique amélioré dans lequel la poudre utilisée au cours d'un *run* est, au moins en partie, une poudre recyclée.

L'invention a notamment pour but de proposer un procédé de fabrication par frittage dont les paramètres changent peu, voire restent inchangés, quel que soit le nombre de recyclages de la poudre recyclée et quelle que soit la proportion en poudre recyclée dans la poudre utilisée.

L'invention a également pour but de proposer un article tridimensionnel, susceptible d'être obtenu par un tel procédé, présentant des propriétés mécaniques satisfaisantes et sensiblement constantes quel que soit le nombre de recyclages de la poudre recyclée et quelle que soit la proportion en poudre recyclée dans la poudre utilisée.

L'invention a également pour but de proposer un article tridimensionnel, susceptible d'être obtenu par un tel procédé, dont la couleur soit sensiblement la même, quel que soit le nombre de recyclages de la poudre recyclée et quelle que soit la proportion en poudre recyclée dans la poudre utilisée.

### Résumé de l'invention

L'invention est définie pas les revendications indépendantes 1, 18, 19 et 20.

L'invention concerne un procédé de fabrication d'un objet tridimensionnel couche-par-couche par frittage d'une poudre par un rayonnement électromagnétique. La poudre est une poudre à base de poly-aryl-éther-cétone(s) (PAEK(s)) et comprend au moins un PAEK et au moins un phosphate. La poudre est, au moins en partie, une poudre recyclée, c'est-à-dire susceptible d'être obtenue par chauffage, continu ou non, pendant une durée d'au moins six heures, d'une poudre de même composition à une température, constante ou non, comprise strictement entre la température de transition vitreuse, Tg, et la température de fusion, Tf, de la poudre.

Les inventeurs ont mis en évidence que l'utilisation de phosphate(s) dans une composition à base de PAEK(s) permet d'en stabiliser la couleur, la viscosité et/ou la masse moléculaire moyenne lorsque la composition est chauffée, de manière continue ou non, à une température, constante ou non, comprise strictement entre la température de transition vitreuse et la température de fusion de la poudre. La stabilisation dans cette gamme de températures est effective sur une durée d'au moins six heures.

Dans certains modes de réalisation, la poudre recyclée provient du recyclage d'une poudre d'au moins une construction précédente couche-par-couche d'un objet tridimensionnel par frittage de poudre par un rayonnement électromagnétique, le frittage des couches de la construction précédente se faisant à une température de construction Tc. En outre, au moins une partie de la poudre recyclée peut provenir d'au moins deux recyclages, ou d'au moins trois recyclages, ou d'au moins cinq recyclages, ou d'au moins dix recyclages, ou d'au moins vingt-cinq recyclages, ou d'au moins cinquante recyclages ou d'au moins cent recyclages de constructions précédentes couche-par-couche d'objets tridimensionnels par frittage de poudre par un rayonnement électromagnétique. Dans certains modes de réalisation, Tc est comprise entre (Tf-50) °C et (Tf-10) °C, bornes incluses.

Dans certains modes de réalisation, Tc est comprise entre (Tg+20) °C et (Tg+70) °C, bornes incluses.

Dans certains modes de réalisation, la poudre susceptible de provenir d'au moins une construction précédente couche-par-couche d'un objet tridimensionnel par frittage de poudre par un rayonnement électromagnétique, a été soumise à une température variant de la température de construction Tc à une température supérieure ou égale à (Tc-40) °C, préférentiellemert variant de la température de construction Tc à une température supérieure ou égale à (Tc-25) °C, et de manière davantage préférée variant de la température de construction Tc à une température supérieure ou égale à (Tc-10) °C, pendant la durée de construction de la construction précédente.

Dans certains modes de réalisation, la poudre comprend au moins 30%, préférentiellement au moins 40%, et très préférentiellement au moins 50% en poids total de poudre, de poudre recyclée.

Dans certains modes de réalisation, ledit au moins un phosphate est un sel. Préférentiellement, le sel de phosphate peut être choisi parmi le groupe constitué : des sels de phosphate d'ammonium, de sodium, de calcium, de zinc, de potassium, d'aluminium, de magnésium, de zirconium, de baryum, de lithium, de terres rares, et leur mélange.

Dans certains modes de réalisation , le sel de phosphate peut être un sel de phosphate organométallique. Le sel de phosphate peut notamment présenter la formule suivante : 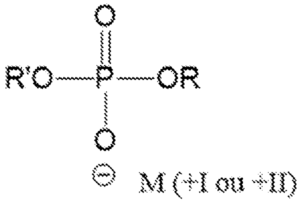 dans laquelle R est différent ou non de R', R et R' étant formés par un ou plusieurs groupements aromatiques substitués ou non par un ou plusieurs groupements possédant de 1 à 9 carbones, R et R' pouvant être directement liés entre eux ou séparés par au moins un groupement choisi parmi les groupements suivants : -CH₂- ; -C(CH₃)₂- ; -C(CF₃)₂- ; -SO₂- ; -S-, -CO- ; et -O-, et dans laquelle M représente un élément du groupe IA ou IIA de la classification périodique.

Dans certains modes de réalisation, ledit sel de phosphate est un sel de H₂PO₄⁻, HPO₄²⁻, PO₄³⁻, ou leur mélange, ayant préférentiellement comme contre-ion un ion sodium, un ion potassium ou un ion calcium. En particulier, le sel de phosphate peut être le phosphate monosodique de sodium.

La poudre comprend au moins 50% en poids de PAEK par rapport au poids total de ladite poudre. Dans certains modes de réalisation, la poudre comprend au moins 75%, ou au moins 80%, ou au moins 85%, ou au moins 90%, ou au moins 92,5%, ou au moins 95%, ou au moins 97,5%, ou au moins 98%, ou au moins 98,5%, ou au moins 99%, ou au moins 99,5% en poids de PAEK par rapport au poids total de ladite poudre.

Selon l'invention, la proportion en ledit au moins un phosphate dans la poudre est supérieure ou égale à 1000 ppm, ou supérieure ou égale à 1500 ppm, ou supérieure ou égale à 2000 ppm, ou supérieure ou égale à 2500 ppm.

Dans certains modes de réalisation, ledit au moins un PAEK est choisi parmi le groupe constitué de : poly-éther-cétone-cétone (PEKK), poly-éther-éther-cétone (PEEK), poly-éther-éther-cétone-cétone (PEEKK), poly-éther-cétone-éther-cétone-cétone (PEKEKK), poly-éther-éther-éther-cétone (PEEEK), polyéther-diphényl-éther-cétone (PEDEK), leurs copolymères et leurs mélanges. Ledit au moins un PAEK peut notamment être du poly-éther-cétone-cétone (PEKK). Dans certains modes de réalisation, la poudre comprend au moins deux PAEK, plus particulièrement du PEKK, et en plus du PEKK, l'un au moins des polymères suivants : PEK, PEEKEK, PEEK, PEEKK, PEKEKK, PEEEK, PEDEK, avec une teneur de moins de 50% en poids du poids total de ladite composition, de préférence inférieure ou égale à 30% massique de la composition.

Dans certains modes de réalisation, une poudre vierge, n'ayant jamais été recyclée et apte à être recyclée, est obtenue par malaxage à sec ou par imprégnation humide, préférentiellement par imprégnation humide, d'une composition dépourvue de phosphate comprenant au moins 50% en poids par rapport au poids total de composition avec ledit/lesdits phosphate(s).

La présente invention concerne également un article tridimensionnel susceptible d'être obtenu à partir d'un procédé tel qu'énoncé ci-dessus.

Enfin, la présente invention concerne l'utilisation de phosphate(s) dans une composition à base de PAEK(s), comprenant au moins 50% en poids par rapport au poids total de poudre d'au moins un PAEK, pour stabiliser la couleur et/ou la masse moléculaire moyenne de la composition, lorsque cette dernière est chauffée à une température strictement comprise entre la température de transition vitreuse et la température de fusion de la composition pendant une durée d'au moins 6 heures.

### Brève description des figures

L'invention sera mieux comprise au regard de la description détaillée qui suit de modes non limitatifs de l'invention et des figures suivantes :
La Figure 1 représente schématiquement un dispositif permettant de mettre en œuvre le procédé de construction d'un objet tridimensionnel couche-par-couche par frittage, selon l'invention.
La Figure 2 représente la variation de l'indice de jaune (D65), également noté « YI(D65) » d'une composition à base de PEKK chauffée à 285°C pendant sept jours sous atmosphère d'azote, pour différents taux de phosphate dans la composition (axe des abscisses).
La Figure 3 représente la variation de la viscosité de la même composition à base de PEKK chauffée à 285°C pendant sept jours sous amosphère d'azote, pour différents taux de phosphate dans la composition (axe des abscisses).

### Description détaillée de l'invention

### Définitions

On entend par le terme « température de transition vitreuse », noté Tg, désigner la température à laquelle un polymère au moins partiellement amorphe passe d'un état caoutchoutique vers un état vitreux, ou vice versa, telle que mesurée par analyse calorimétrique différentielle (DSC) selon la norme NF ISO 11357, partie 2, en utilisant une vitesse de chauffe de 20°C/min. Dans la présente invention, quand il est fait référence à une température de transition vitreuse, il s'agit plus particulièrement de, sauf indication contraire, la température de transition vitreuse en demi-hauteur de palier telle que définie dans cette norme. Les poudres à base de PAEK(s) dans la présente invention peuvent éventuellement présenter plusieurs paliers de transition vitreuse dans l'analyse de DSC, notamment dus à la présence de plusieurs PAEKs. Dans ce cas, on entend par température de transition vitreuse, la température de transition vitreuse correspondant au palier de transition vitreuse le plus élevé en température.

On entend par le terme « température de fusion », noté Tf, désigner la température à laquelle un polymère au moins partiellement cristallin passe à l'état liquide visqueux, telle que mesurée par calorimétrie différentielle à balayage (DSC) selon la norme NF EN ISO 11357, partie 3, en utilisant une vitesse de chauffe de 20°C/min. Dans la présente invention, quand il est fait référence à une température de fusion, il s'agit plus particulièrement de, sauf indication contraire, la température de fusion de pic telle que définie dans cette norme. Les poudres à base de PAEK(s) dans la présente invention peuvent éventuellement présenter plusieurs pics de fusion dans l'analyse de DSC, notamment dus à la présence de différentes formes cristallines pour un PAEK et/ou dû à la présence de plusieurs PAEKs différents. Dans ce cas, on entend par température de fusion de la poudre la température de fusion correspondant au pic de fusion le plus élevé en température.

On entend par « masse moléculaire moyenne » désigner la masse moléculaire moyenne en poids d'une macromolécule d'un polymère.

On entend par le terme « viscosité » désigner l'indice de viscosité tel que mesuré en solution à 25 ° C dans une solution aqueuse d'acide sulfurique à 96% en masse, selon la norme ISO 307.

On entend par le terme « indice de jaune » ou « YI » désigner la déviation chromatique d'incolore ou blanc à jaune mesurée selon la norme ASTM E313-96 avec comme illuminant D65. Cet indice peut être mesuré à l'aide d'un spectrophotomètre de type Konica Minolta, CM-3610d.

On entend par le terme « mélange de polymères » désigner une composition de polymères homogène macroscopiquement. Le terme englobe également de telles compositions composées de phases non miscibles entre elles et dispersées à échelle micrométrique.

On entend par le terme « copolymère » désigner un polymère issu de la copolymérisation d'au moins deux types de monomère chimiquement différents, appelés comonomères. Un copolymère est donc formé d'au moins deux motifs de répétition. Il peut également être formé de trois ou plus motifs de répétition.

On entend par « stabiliser » désigner le fait de permettre que certaines des propriétés physico-chimiques, notamment la masse moléculaire moyenne, la viscosité ou la couleur, d'un polymère ne varient que dans un intervalle limité lorsqu'il est chauffé à une température comprise entre sa température de transition vitreuse et sa température de fusion.

Dans l'ensemble des gammes énoncées dans la présente demande, les bornes sont incluses sauf mention contraire.

### Poly-aryl-éther-cétones

Les poly-aryl-éther-cétones (PAEK) des poudres utilisées dans le procédé selon l'invention comportent les motifs de formules suivantes:

(-Ar-X-) et (-Ar₁-Y-)

dans lesquelles :
Ar et Ar₁ désignent chacun un radical aromatique divalent;
Ar et Ar₁ peuvent être choisis, de préférence, parmi le 1,3-phénylène, 1,4-phénylène, le 4,4'-biphénylène, le 1,4- naphthylène, le 1,5-naphthylène et le 2,6-naphthylène ;
X désigne un groupe électroattracteur ; il peut être choisi, de préférence, parmi le groupe carbonyle et le groupe sulfonyle,
Y désigne un groupe choisi parmi un atome d'oxygène, un atome de soufre, un groupe alkylène, tel que -CH₂- et isopropylidène.

Dans ces motifs X et Y, au moins 50%, de préférence au moins 70% et plus particulièrement, au moins 80% des groupes X sont un groupe carbonyle, et au moins 50%, de préférence au moins 70% et plus particulièrement au moins 80% des groupes Y représentent un atome d'oxygène.

Selon un mode de réalisation préféré, 100% des groupes X désignent un groupe carbonyle et 100% des groupes Y représentent un atome d'oxygène.

Plus préférentiellement, le poly-aryl-éther-cétone (PAEK) peut être choisi parmi :
- un poly-éther-cétone-cétone également nommé PEKK comprenant notamment des motifs de formule I A (également appelé : « motif I », comme isophtalique), ou de formule I B (également appelé : « motif T », comme téréphtalique), ou leur mélange : 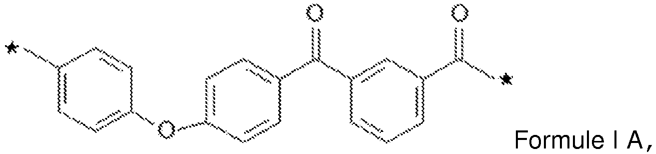 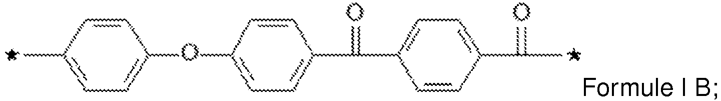
- un poly-éther-éther-cétone également nommé PEEK comprenant des motifs de formule IIA, ou de formule IIB, ou de formule IIC, ou de formule IID ou leur mélange : 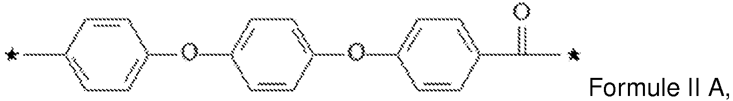 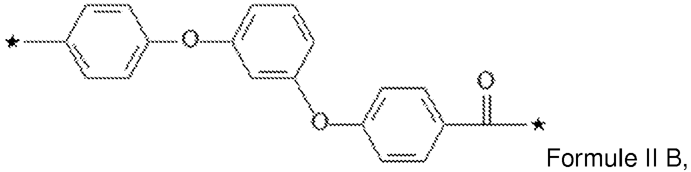 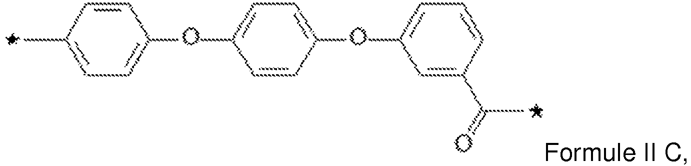 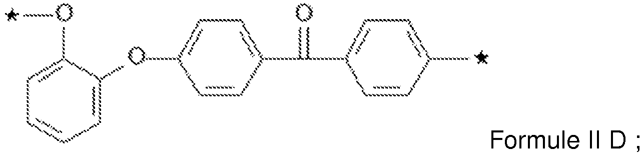
- un poly-éther-cétone également nommé PEK, comprenant notamment des motifs de formule III A, ou de formule III B, ou de formule III C ou leur mélange : 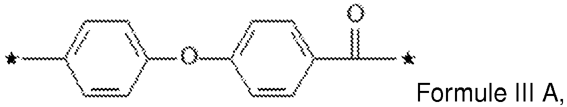 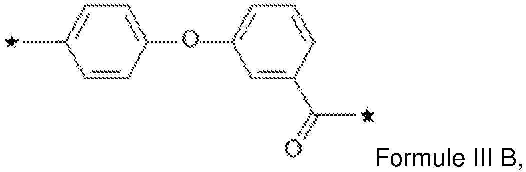 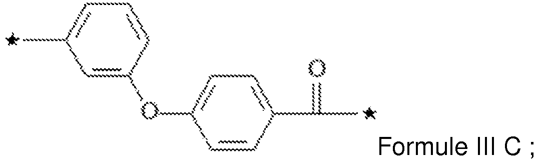
- un poly-éther-éther-cétone-cétone également nommé PEEKK, comprenant notamment des motifs de formule IV : 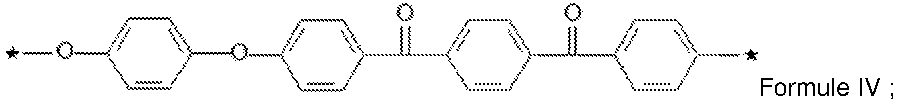
- un poly-éther-éther-éther-cétone également nommé PEEEK, comprenant notamment des motifs de formule V : 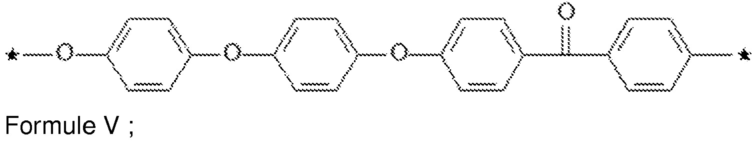 et,
- un poly-éther-diphényle-éther-cétone également nommé PEDEK, comprenant notamment des motifs de formule VI :

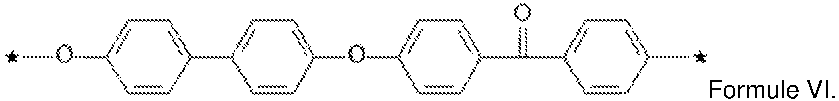

Dans les formules de motifs ci-dessus, d'autres arrangements du groupe carbonyle et de l'atome d'oxygène en position méta ou para des groupes phénylènes n'ont pas été représentés mais sont également possibles.

Dans les formules de motifs ci-dessus, d'autres arrangements dans lesquels un groupe diphényle remplace un groupement phényle n'ont pas été représentés mais sont également possibles. Le groupe diphényle est constitués de deux groupements phénylènes reliés entre eux, chaque phénylène pouvant être de type 1,3 ou 1,4.

Le PAEK peut également être un copolymère comprenant différents motifs tels qu'énoncés ci-dessus. Le PAEK peut notamment être un copolymère PEEK-PEDEK comprenant des motifs de PEEK, notamment de formule IIA et/ou ses isomères ayant notamment pour formule IIB, IIC et IID, et des motifs de PEDEK, notamment de formule VI et/ou ses isomères, notamment dont les groupes diphényles comprennent des groupements phénylènes de type 1,3 ou 1,4.

En outre, des défauts, des groupes terminaux et/ou des monomères peuvent être incorporés en très faible quantité dans les polymères tels que décrits ci-dessus, sans pour autant avoir une incidence sur leur performance.

La poudre utilisée dans le procédé selon l'invention est à base de PAEK(s). Elle comprend donc généralement au moins 50% en poids par rapport au poids total de poudre d'un seul PAEK ou d'un mélange de PAEKs. Dans certains modes de réalisation elle comprend au moins 75%, ou au moins 80%, ou au moins 85%, ou au moins 90%, ou au moins 92,5%, ou au moins 95%, ou au moins 97,5%, ou au moins 98%, ou au moins 98,5%, ou au moins 99%, ou au moins 99,5% en poids de PAEK(s) par rapport au poids total de la poudre.

Selon une variante de réalisation, la poudre à base de PAEK peut être une poudre à base de l'un des polymères suivants : PEEK, PEEKK, PEKEKK, PEEEK, PEDEK ou copolymère PEEK-PEDEK comme unique PAEK dans la poudre.

Selon une autre variante, la poudre à base de PAEK peut notamment être une poudre à base de PEKK comme unique type de la famille des PAEKs dans la poudre. Selon certains modes de réalisation, le PEKK peut notamment être un mélange de différents copolymères de PEKK. En particulier le PEKK peut être un mélange de copolymères de PEKK ayant un ratio différent de motifs de formule IA et de motifs de formule IB. Selon d'autres modes de réalisation, le PEKK peut être un unique type de copolymère de PEKK.

Selon encore une autre variante, la poudre à base de PAEKs peut également être une poudre à base d'un mélange de polymères de la famille des PAEKs. Ainsi, la poudre peut notamment être une poudre à base de PEKK et comprendre, en plus du PEKK, l'un au moins des polymères suivants : PEK, PEEKEK, PEEK, PEEKK, PEKEKK, PEEEK, PEDEK, copolymère PEEK-PEDEK, avec une teneur de moins de 50% massique de la poudre, de préférence inférieure ou égale à 30% massique de la poudre.

Dans les poudres à base de PEKK(s), la proportion massique de motifs T par rapport à la somme des motifs T et I du PEKK peut varier de 0 à 5 % ; ou de 5 à 10 % ; ou de 10 à 15 % ; ou de 15 à 20 % ; ou de 15 à 20 % ; ou de 20 à 25 % ; ou de 25 à 30 % ; ou de 30 à 35 % ; ou de 35 à 40 % ; ou de 40 à 45 % ; ou de 45 à 50 % ; ou de 50 à 55 % ; ou de 55 à 60 % ; ou de 60 à 65 % ; ou de 65 à 70 % ; ou de 70 à 75 % ; ou de 75 à 80 % ; ou de 80 à 85 % ; ou de 85 à 90 % ; ou de 90 à 95 % ; ou de 95 à 100 %.

Des gammes de 35 à 100%, notamment de 45 à 85 % et plus spécifiquement encore de 50 à 80 %, sont particulièrement appropriées. De préférence, le PEKK utilisé a une proportion massique de motifs T par rapport à la somme des motifs T et I d'environ 60 %.

Le choix de la proportion massique de motifs T par rapport à la somme des motifs T et I est l'un des facteurs qui permet d'ajuster la température de fusion et la vitesse de cristallisation à une température donnée du PEKK. Une proportion massique donnée de motifs T par rapport à la somme des motifs T et I peut être obtenue en ajustant les concentrations respectives des réactifs lors de la polymérisation, de manière connue en soi.

Dans les poudres à base de copolymère(s) PEEK-PEDEK(s), la proportion molaire en motif IIA par rapport à la somme des motifs IIA et VI peut varier de 0 à 5 % ; ou de 5 à 10 % ; ou de 10 à 15 % ; ou de 15 à 20 % ; ou de 15 à 20 % ; ou de 20 à 25 % ; ou de 25 à 30 % ; ou de 30 à 35 % ; ou de 35 à 40 % ; ou de 40 à 45 % ; ou de 45 à 50 % ; ou de 50 à 55 % ; ou de 55 à 60 % ; ou de 60 à 65 % ; ou de 65 à 70 % ; ou de 70 à 75 % ; ou de 75 à 80 % ; ou de 80 à 85 % ; ou de 85 à 90 % ; ou de 90 à 95 % ; ou de 95 à 100 %.

Des gammes de 35 à 100%, notamment de 45 à 85 % et plus spécifiquement encore de 50 à 80 %, sont particulièrement appropriées.

Le choix de la proportion massique de motifs IIA par rapport à la somme des motifs IIA et VI est l'un des facteurs qui permet d'ajuster la température de fusion et la vitesse de cristallisation à une température donnée du copolymère PEEK-PEDEK.

### Phosphates

Un phosphate est soit un sel d'acide phosphorique ou de l'un de ses esters, soit un ester d'acide phosphorique n'étant pas sous forme de sel. Les phosphates ont en commun un atome de phosphore entouré par quatre atomes d'oxygène dans un tétraèdre.

Un ou plusieurs phosphate(s) peut (peuvent) être incorporé(s) dans la poudre à base de PAEK.

De manière préférentielle, le phosphate est un sel. Ceci a pour avantage notamment de permettre son incorporation à la poudre à base de PAEK(s) sous forme aqueuse.

Le sel de phosphate peut avantageusement être choisi parmi un (des) sel(s) de phosphate d'ammonium, de sodium, de calcium, de zinc, d'aluminium, de potassium, de magnésium, de zirconium, de baryum, de lithium, ou de terres rares.

Selon certains modes de réalisation, le(s) sel(s) de phosphate est (sont) un (des) sel(s) de phosphate organométallique.

Selon certains modes de réalisation, le ou les sel(s) de phosphate organométallique(s) peut (peuvent) présenter la formule suivante : 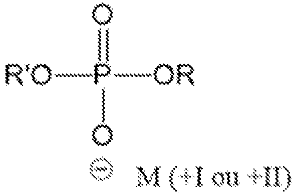 dans laquelle R est différent ou non de R', R et R' étant formés par un ou plusieurs groupements aromatiques substitués ou non par un ou plusieurs groupements possédant de 1 à 9 carbones, R et R' pouvant être directement liés entre eux ou séparés par au moins un groupement choisi parmi les groupements suivants : - CH₂- ; -C(CH3)₂- ; -C(CF₃)₂- ; -SO₂- ; -S-, -CO- ; -O- et M représente un élément du groupe IA ou IIA de la classification périodique.

Selon certains modes de réalisation, ledit au moins un sel de phosphate est un sel de H₂PO₄⁻, HPO₄²⁻, PO₄³⁻, ou leur mélange.

Parmi les mélanges, le mélange de sels de H₂PO₄⁻ et de HPO₄²⁻ et le mélange de sels de HPO₄²⁻ et de PO4³⁻ sont particulièrement préférés. Le contre-ion de ces mélanges est préférentiellement un ion sodium, un ion potassium ou un ion calcium et, de manière davantage préférée un ion sodium.

Dans les modes de réalisation ou le sel de phosphate ne comprend qu'un seul phosphate, le sel de phosphate est avantageusement un sel H₂PO₄⁻ de sodium, de potassium ou de calcium. De manière préférée, le sel de phosphate est le phosphate monosodique de sodium.

Le phosphate, ou le mélange de phosphates, est incorporé dans la poudre dans une proportion supérieure ou égale à 1000 ppm, ou supérieure ou égale à 1500 ppm, ou supérieure ou égale à 2000 ppm, ou supérieure ou égale à 2500 ppm. Avantageusement, le phosphate, ou le mélange de phosphates, est incorporé dans la poudre dans une proportion ne dépassant pas 50 000 ppm, ou ne dépassant pas 25 000 ppm, ou ne dépassant pas 20 000 ppm. En particulier, le phosphate, ou le mélange de phosphates, peut être incorporé dans la poudre dans une proportion comprise entre 1000 ppm et 5000 ppm, ou entre 5000 ppm et 10000 ppm, ou entre 10000 ppm et 15000 ppm, ou encore entre 15000 ppm et 20000 ppm.

Les inventeurs ont mis en évidence que l'ajout d'un phosphate ou d'un mélange de phosphates dans une composition à base de PAEK(s), notamment sous forme de poudre, telle que décrite ci-dessus pouvait être utilisé avantageusement pour stabiliser la couleur de la composition lorsque cette dernière est chauffée à une température strictement comprise entre la température de transition vitreuse et la température de fusion de la composition.

On considérera notamment qu'une stabilisation effective de la couleur est obtenue si l'indice de jaune de la composition a une variation inférieure ou égale à 100%, ou inférieure ou égale à 90 %, ou inférieure ou égale à 80%, ou inférieure ou égale à 70%, ou inférieure ou égale à 60%, ou inférieure ou égale à 50%, en particulier inférieure ou égale à 25%, lorsque la composition est chauffée à une température égale à environ 20°C en-dessous de sa température de fusion pendant une durée de sept jours sous atmosphère d'azote.

De même, les inventeurs ont également mis en évidence que l'ajout d'un phosphate ou d'un mélange de phosphates dans une telle composition à base de PAEK(s), notamment sous forme de poudre, pouvait être utilisé avantageusement pour stabiliser la viscosité de poly-aryl-éther-cétone(s) (PAEK(s)) dans une composition à base de poly-aryl-éther-cétone(s), lorsque la composition est chauffée à une température strictement comprise entre sa température de transition vitreuse et sa température de fusion.

On considérera notamment qu'une stabilisation effective la viscosité est obtenue si l'indice de viscosité de la composition, tel que mesuré en solution à 25°C dans une solution aqueuse d'acide sulfurique à 96% en masse, a une variation inférieure ou égale à 20%, ou inférieure ou égale à 15 %, ou inférieure ou égale à 10%, en particulier inférieure ou égale à 5% et tout particulièrement comprise entre -5% et +10%, lorsque la composition est chauffée à une température égale à environ 20°C en-dessous de sa température de fusion pendant une durée de sept jours sous atmosphère d'azote.

La stabilisation, notamment de la couleur et de la viscosité du (des) PAEK(s) de la composition, permet de garantir une faible variation de couleur et de viscosité de la poudre à base de PAEK(s) après plusieurs heures de chauffage à une température comprise strictement entre sa température de transition vitreuse et sa température de fusion. Des objets de couleur homogène et uniforme et ayant des propriétés mécaniques homogènes et uniformes peuvent ainsi être obtenus. C'est ainsi que les inventeurs ont proposé des procédés améliorés de frittage par un rayonnement électromagnétique de poudre, utilisant une poudre à base de PAEK(s), au moins en partie, recyclée.

### Poudre

La poudre comprend au moins un PAEK et au moins un phosphate.

Elle peut en outre contenir un ou plusieurs autres polymères n'appartenant pas à la famille des PAEK, notamment d'autres polymères thermoplastiques.

La poudre peut également comprendre un agent d'écoulement hydrophile ou hydrophobe. Dans certains modes de réalisation, la poudre comprend de 0,01 à 0,4 % en poids d'agent d'écoulement, de préférence de 0,01 à 0,2 % en poids d'agent d'écoulement et encore de préférence de 0,01 à 0,1 % en poids d'agent d'écoulement. La poudre peut par exemple comprendre de 0,01 à 0,05 % en poids d'agent d'écoulement, ou de 0,05 à 0,1 % en poids d'agent d'écoulement, ou de 0,1 à 0,2 % en poids d'agent d'écoulement, ou de 0,2 à 0,3 % en poids d'agent d'écoulement, ou de 0,3 à 0,4 % en poids d'agent d'écoulement.

La poudre peut comprendre en outre des additifs et/ou des charges n'étant pas des phosphates.

Parmi les charges, citons les charges renforçantes, notamment des charges minérales telles que le noir de carbone, des nanotubes, de carbone ou non, des fibres (verre, carbone...), broyées ou non. La poudre de PEKK peut ainsi comprendre moins de 50 % en poids de charges, et de préférence moins de 40 % en poids de charges par rapport au poids total de poudre.

Parmi les additifs, on peut citer les agents stabilisants (lumière, en particulier UV, et chaleur), les azurants optiques, colorants, pigments, les additifs absorbeurs d'énergie (dont absorbeurs d'UV) ou une combinaison de ces charges ou additifs.

La poudre peut ainsi comprendre moins de 5 % en poids d'additifs, et de préférence moins de 1 % en poids d'additifs.

La poudre selon l'invention peut être préparée par toute méthode connue, permettant l'obtention d'un mélange homogène contenant la composition à base de PAEK(s) et comprenant au moins un phosphate, et éventuellement d'autres additifs, charges, autres polymères. Une telle méthode peut être choisie parmi les techniques de *dry blend* (ou malaxage à sec utilisant par exemple un malaxeur à rouleau), d'extrusion à l'état fondu, de compoundage, ou encore d'imprégnation humide ou au cours du procédé de synthèse du polymère.

Préférentiellement, la poudre est préparée par la technique de *dry blend* ou la technique d'imprégnation humide d'une composition à base de PAEK(s) dépourvue de phosphate avec ledit au moins un phosphate. Ces deux méthodes ont pour avantage de ne pas chauffer la composition au-dessus de sa température de fusion. De manière encore préférée, la poudre est obtenue par la technique d'imprégnation humide, ce qui permet généralement une meilleure dispersion que la technique de *dry blend.*

La poudre est adaptée pour le frittage par rayonnement électromagnétique. Ce type de poudre présente généralement une répartition de taille de particules, mesurée par diffraction laser, par exemple sur un diffractomètre Malvern, tel que le diamètre médian « d50 », sur une base volumétrique, soit strictement inférieur à 100 µm. « d50 » représente la valeur du diamètre des particules pour que la fonction cumulative de distribution des tailles de particule sur une base volumétrique soit égale à 50%. Préférentiellement, la poudre présente une répartition de taille de particules de d10>15µm, 50<d50<80µm, et 120<d90<180µm. « d10 » et « d90 » sont respectivement les diamètres correspondants pour que la fonction cumulative soit égale à 10%, et respectivement, à 90%. Les procédés de broyage permettant d'obtenir de telles poudres sont connus en soi. Un procédé particulièrement avantageux a été décrit dans la demande publiée sous le numéro EP 2776224.

La poudre peut avoir une température de fusion inférieure à 330°C, de préférence inférieure ou égale à 320°C, et encore de préférence inférieure ou égale à 310°C.

Dans certains modes de réalisation, la poudre destinée à être utilisée dans un procédé de construction d'objet tridimensionnel couche par couche par frittage provoqué par un rayonnement électromagnétique, peut subir préalablement à sa première utilisation, un traitement thermique isotherme. Dans ce cas, le traitement thermique est réalisé à une température inférieure à la température de fusion de la poudre et peut être utile dans le cas où plusieurs formes cristallines d'un PAEK (ayant différentes températures de fusion) coexistent, ce qui peut affecter la qualité du frittage. La durée d'un tel traitement thermique est cependant typiquement inférieure à 6 heures. Elle est généralement inférieure ou égale à 4 heures et préférentiellement inférieure ou égale à 2 heures.

Selon la variante dans laquelle la poudre à base de PAEK est une poudre à base de PEKK, notamment une poudre à base de PEKK comme seul PAEK, un traitement thermique isotherme préalable peut être mis en œuvre à une température de 260 à 290 ° C et de préférence de 280 à 290°C. Le traitement thermique isotherme préalable à l'étape de frittage, permet l'obtention d'une poudre de morphologie cristalline stable, c'est-à-dire une poudre qui ne subit pas de fusion jusqu'à la température de construction. La durée du traitement thermique isotherme est typiquement inférieure à 6 heures. Elle est généralement inférieure ou égale à 4 heures et préférentiellement inférieure ou égale à 2 heures.

Dans certains modes de réalisation, la poudre peut avoir une structure noyau-écorce, encore appelée structure « *core*/*shell* », dans laquelle la température de fusion du noyau est supérieure à la température de fusion de l'écorce. Dans ces modes de réalisation, la composition de noyau et la composition d'écorce sont chacune à base de PAEK(s) et contiennent chacune au moins un phosphate.

### Procédé de frittage

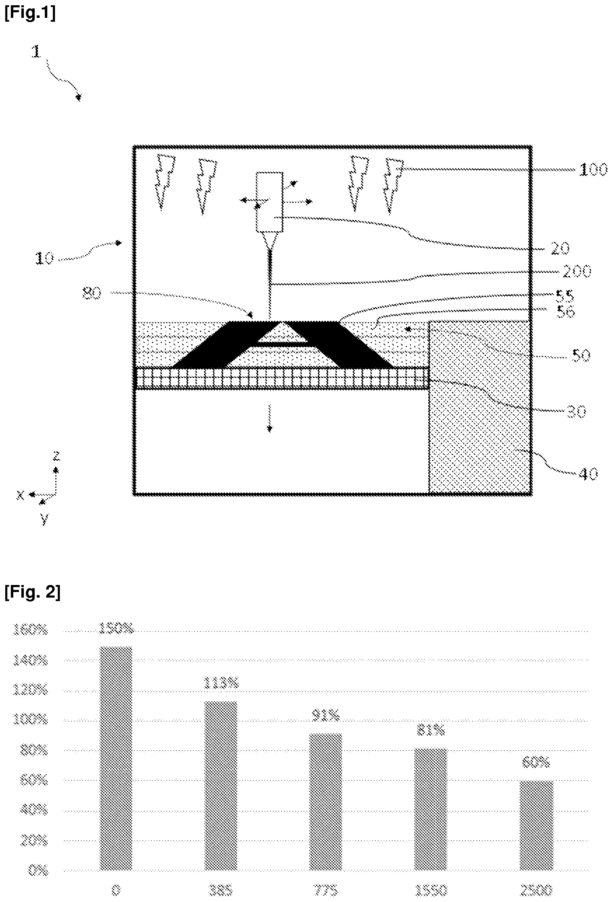

La poudre à base de PAEK(s), telle que décrite ci-dessus, est utilisée pour un procédé de construction d'objet tridimensionnel couche-par-couche par frittage provoqué par un rayonnement électromagnétique dans un dispositif 1, tel que celui schématisé en Figure 1. La poudre est constituée de poudre recyclée et optionnellement de poudre vierge, tel qu'expliqué plus loin.

Le rayonnement électromagnétique peut être par exemple être un rayonnement infrarouge, un rayonnement ultraviolet, ou de préférence un rayonnement laser. En particulier, dans un dispositif 1 tel que celui schématisé en Figure 1, le rayonnement électromagnétique peut comprendre une combinaison de rayonnement infrarouge 100 et un rayonnement laser 200 en combinaison.

Le procédé de frittage est un procédé de fabrication couche-à-couche pour construire un objet tridimensionnel 80.

Le dispositif 1 comprend une enceinte de frittage 10 dans laquelle sont disposés un bac d'alimentation 40 contenant la poudre à base de PAEK(s), une plaque horizontale 30 permettant de supporter l'objet tridimensionnel 80 en construction et un laser 20.

Selon le procédé, de la poudre est prélevée du bac d'alimentation 40 et déposée sur la plaque horizontale 30, formant une fine couche 50 de poudre constitutive de l'objet tridimensionnel 80 en construction. La couche de poudre 50, en construction, est chauffée grâce à un rayonnement infra-rouge 100 pour atteindre une température sensiblement uniforme égale à une température de construction Tc prédéterminée.

La température de construction Tc peut être inférieure à la température de fusion Tf de la poudre de moins de 50°C, de préférence demoins de 40°C, de préférence encore de moins de 30°C, et encore de préférence de 20°C environ. Tc est avantageusement inférieure à Tf de plus de 10°C.

Alternativement, Tc peut être supérieure à la température de transition vitreuse de la poudre de moins de 70°C, de préférence de moins de 60°C, de préférence de moins de 50°C, de préférence de moins de 40°C, encore de préférence de 30°C environ. Tc est avantageusement supérieure à Tg de plus de 20°C.

L'énergie nécessaire à fritter les particules de poudre en différents points de la couche de poudre 50 est ensuite apportée par un rayonnement laser 200 du laser 20 mobile dans le plan (xy), selon une géométrie correspondant à celle de l'objet. La poudre fondue se re-solidifie formant une partie frittée 55 alors que le reste de la couche 50 reste sous forme de poudre non frittée 56. Plusieurs passages de rayonnement laser 200 peuvent être nécessaires dans certains cas.

Ensuite, la plaque horizontale 30 est abaissée selon l'axe (z) d'une distance correspondant à l'épaisseur d'une couche de poudre, et une nouvelle couche est déposée. Le laser 20 apporte l'énergie nécessaire pour fritter les particules de poudre selon une géométrie correspondant à cette nouvelle tranche de l'objet et ainsi de suite. La procédure est répétée jusqu'à ce que l'on ait fabriqué l'objet 80. La température dans l'enceinte de frittage 10 des couches inférieures à la couche en cours de construction peut être inférieure à la température de construction. Cette température reste cependant généralement au-dessus la température de transition vitreuse de la poudre. Il est notamment avantageux que la température du fond de l'enceinte soit maintenue à une température Tb, dite « température de fond de bac », tel que Tb soit inférieure à Tc de moins de 40°C, de préférence de moins de 25°C et encore de préférence de moins de 10°C. Ainsi à l'issue de la construction de l'objet tridimensionnel 80 par frittage de poudre, la partie de la poudre qui n'a pas été frittée 56, a été soumise pendant la durée de construction à un traitement thermique de l'ordre de plusieurs heures, en moyenne de l'ordre d'au moins six heures, à une température variable mais comprise strictement entre la température de transition vitreuse et la température de fusion de la poudre.

Une fois l'objet 80 terminé, il est retiré de la plaque horizontale 30 et la poudre non frittée 56 peut être tamisée avant d'être renvoyée, au moins en partie, dans le bac d'alimentation 40 pour servir de poudre recyclée.

On entend par « poudre vierge » une poudre apte à être utilisée dans un procédé de frittage tel que décrit ci-dessus pour la première fois.

A contrario une « poudre recyclée » est une poudre de même composition initiale que la poudre vierge et qui a subi un traitement thermique, notamment lors d'une construction précédente par frittage. C'est ainsi qu'une « poudre recyclée » est ici définie comme une poudre susceptible d'être obtenue par chauffage, continu ou non, pendant une durée d'au moins six heures, d'une poudre, notamment d'une poudre vierge, de même composition à une température, constante ou non, strictement comprise entre la température de transition vitreuse Tg et la température de fusion Tf de la poudre.

Dans le mode de réalisation particulier où la poudre a une structure de type noyau-écorce, la température de transition vitreuse Tg et la température de fusion Tf de la poudre, au sens de l'invention, doivent être comprises comme étant respectivement la température de transition vitreuse et la température de fusion de l'écorce.

La poudre recyclée peut provenir du recyclage de poudre d'au moins une construction précédente couche-par-couche d'un objet tridimensionnel par frittage de poudre par un rayonnement électromagnétique.

La poudre peut avantageusement être recyclée au moins deux fois, ou au moins trois fois, ou au moins cinq fois, ou au moins dix fois, ou au moins vingt-cinq fois, ou au moins cinquante fois, ou au moins cent fois.

La poudre recyclée peut être utilisée telle qu'elle ou alternativement en mélange avec d'autres poudres recyclées ou une poudre vierge.

Avantageusement, la poudre utilisée dans le procédé de frittage de l'invention comprend en poids total de poudre au moins 30%, préférentiellement au moins 40%, et très préférentiellement au moins 50% de poudre recyclée.

Autrement dit, une poudre « recyclée n fois » pour une construction donnée n, n étant un entier supérieur ou égal à 1, est une poudre pouvant provenir d'une construction précédente (n-1) achevée.

Dans le cas où n=1, la poudre « recyclée 1 fois » dans une construction 1 peut provenir du recyclage d'une poudre initialement uniquement vierge utilisée dans une construction 0.

Dans le cas où n=2, la poudre « recyclée 2 fois » dans une construction 2 peut provenir du recyclage de : une poudre initialement uniquement recyclée 1 fois ou d'un mélange initial d'une poudre recyclée 1 fois et de poudre vierge, utilisés dans une construction 1.

De manière générale, pour tout n supérieur ou égal à 2, la poudre « recyclée n fois » dans une construction n peut provenir du recyclage de : une poudre initialement uniquement recyclée (n-1) fois ou d'un mélange initial d'une poudre recyclée (n-1) fois et de poudre vierge, utilisés dans une construction (n-1). Ainsi, la poudre recyclée « n fois » a subi, au moins en partie, un chauffage correspondant aux constructions 0, ..., (n-1) successives. En outre, la poudre recyclée « n fois » a subi dans sa totalité au moins le chauffage de la construction (n-1).

Le procédé selon l'invention, utilisant une poudre recyclée, présente comme avantage que la température de construction utilisée peut être sensiblement la même que celle d'un procédé utilisant uniquement une poudre vierge.

### Exemple

L'exemple suivant a pour but de mettre en évidence les effets de l'ajout de phosphate(s) dans une composition à base de PAEK(s) sur la stabilité de la composition, lorsque la composition est chauffée à une température strictement comprise entre sa température de transition vitreuse et sa température de fusion. La portée de l'invention ne serait être réduite à simplement l'illustration de cet exemple.

Plusieurs compositions comprenant du Kepstan^{®} PEKK 6000, grade PL et du sel de phosphate monosodique de sodium en différentes proportions ont été préparées.

Le Kepstan^{®} PEKK 6000 est un poly-éther-cétone-cétone, commercialisé par la société Arkema. Il a une proportion massique de motifs T par rapport à la somme des motifs T et I de 60 %. Sa température de fusion est comprise entre 300°C et 305°C. Sa température de transition vitreuse égale à 160°C. Le grade utilisé est une poudre ayant un d50 de 50 µm et ayant subi un prétraitement thermique isotherme à 285°C pendant 4 heures. Il a un indice de viscosité initial de 0.98 dL/g.

La poudre de Kepstan^{®} PEKK 6000 a été imprégnée de phosphate par imprégnation humide dans une solution aqueuse de phosphate monosodique de sodium puis séchage de la poudre.

Une poudre témoin ne comprenant pas de phosphate et quatre poudres comprenant respectivement 385 ppm, 775 ppm, 1550 ppm et 2500 ppm de sel de phosphate monosodique ont été préparées. Les poudres ont été placées dans un milieu sous azote pendant 7 jours à 285°C. Leur indce de jaune ainsi que leur viscosité ont été mesurées à t=0 et à t=7 jours.

Comme le montre la Figure 2, l'ajout de phosphate monosodique de sodium a permis de mitiger l'augmentation d'indice de jaune après 7 jours (variation de +150% de l'indice de jaune de la poudre témoin comparé à des variations inférieures à +100% pour les poudres comprenant respectivement 775 ppm, 1550ppm et 2500 ppm de phosphate).

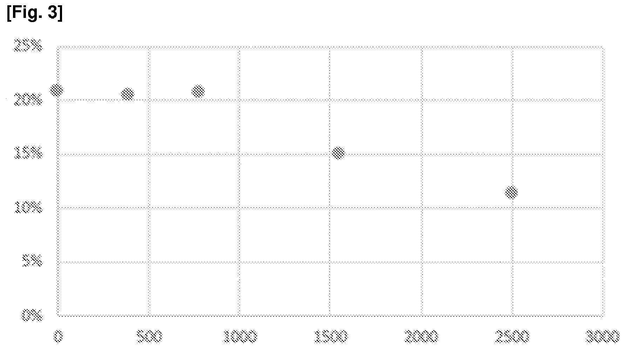

Comme le montre la Figure 3, l'ajout de phosphate monosodique de sodium a permis de limiter l'augmentation de viscosité après 7 jours (variation de + 20% de la viscosité de la poudre témoin comparé à des variations inférieures à +15 % pour les poudres comprenant respectivement 1550 ppm et 2500 ppm de phosphate).

## Revendications

1. Procédé de fabrication d'un objet tridimensionnel couche-par-couche par frittage d'une poudre à base de poly-aryl-éther-cétones, PAEKs, par un rayonnement électromagnétique, dans lequel
ladite poudre comprend au moins 50% en poids par rapport au poids total de poudre d'au moins un PAEK et au moins un phosphate, ladite poudre étant, au moins en partie, une poudre recyclée ;
la proportion en ledit au moins un phosphate dans ladite poudre étant supérieure ou égale à 1000 ppm ;
ladite poudre recyclée étant susceptible d'être obtenue par chauffage, continu ou non, pendant une durée d'au moins six heures, d'une poudre de même composition à une température, constante ou non, strictement comprise entre la température de transition vitreuse, Tg, et la température de fusion, Tf, de la poudre.

2. Procédé de fabrication selon la revendication 1, dans lequel la poudre recyclée est une poudre susceptible de provenir d'au moins une construction précédente couche-par-couche d'un objet tridimensionnel par frittage de poudre par un rayonnement électromagnétique, le frittage des couches de la construction précédente se faisant à une température de construction Tc.

3. Procédé de fabrication selon la revendication 2, dans lequel au moins une partie de la poudre recyclée a été recyclée au moins deux fois, ou au moins trois fois, ou au moins cinq fois, ou au moins dix fois, ou au moins vingt-cinq fois, ou au moins cinquante fois, ou au moins cent fois dans au moins une construction précédente couche-par-couche d'objets tridimensionnels par frittage de poudre par un rayonnement électromagnétique.

4. Procédé de fabrication selon l'une quelconque des revendications 2 et 3, dans lequel Tc est comprise entre (Tf-50) °C et (Tf-10) °C, bornes incluses ; ou,
Tc est comprise entre (Tg+20) °C et (Tg+70) °C, bornes incluses.

5. Procédé de fabrication selon la revendication 4, dans lequel la poudre susceptible de provenir d'au moins une construction précédente couche-par-couche d'un objet tridimensionnel par frittage de poudre par un rayonnement électromagnétique, a été soumise à une température variant de la température de construction Tc à une température de fond de bac Tb, pendant la durée de construction de la construction précédente,
la température de fond de bac Tb étant supérieure ou égale à (Tc-40) °C, préférentiellement supérieure ou égale à (Tc-25) °C, et de manière davantage préférée supérieure ou égale à (Tc-10) °C.

6. Procédé de fabrication selon l'une quelconque des revendications 1 à 5, dans lequel ladite poudre comprend en poids total de poudre au moins 30%, préférentiellement au moins 40%, et très préférentiellement au moins 50% de poudre recyclée.

7. Procédé de fabrication selon l'une quelconque des revendications 1 à 6, dans lequel ledit au moins un phosphate est un sel.

8. Procédé de fabrication selon la revendication 7, dans lequel ledit sel de phosphate est choisi parmi le groupe constitué : des sels de phosphate d'ammonium, de sodium, de calcium, de zinc, de potassium, d'aluminium, de magnésium, de zirconium, de baryum, de lithium, de terres rares, et leur mélange.

9. Procédé de fabrication selon la revendication 8, dans lequel ledit sel de phosphate présente la formule suivante : 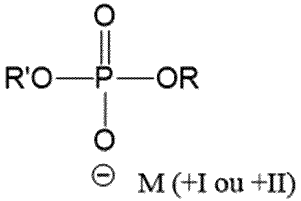 dans laquelle R est différent ou non de R', R et R' étant formés par un ou plusieurs groupements aromatiques substitués ou non par un ou plusieurs groupements possédant de 1 à 9 carbones, R et R' pouvant être directement liés entre eux ou séparés par au moins un groupement choisi parmi les groupements suivants : - CH₂- ; -C(CH₃)₂- ; -C(CF₃)₂- ; -SO₂- ; -S-, -CO- ; et -O- et, dans laquelle M représente un élément du groupe IA ou IIA de la classification périodique.

10. Procédé de fabrication selon l'une quelconque des revendications 7 et 8, dans lequel ledit sel de phosphate est un sel de H₂PO₄⁻, HPO₄²⁻, PO₄³⁻, ou leur mélange, ayant préférentiellement comme contre-ion un ion sodium, un ion potassium ou un ion calcium.

11. Procédé de fabrication selon la revendication 7, dans lequel ledit sel de phosphate est le phosphate monosodique de sodium.

12. Procédé de fabrication selon l'une quelconque des revendications 1 à 11, dans lequel ladite poudre comprend au moins 75%, ou au moins 80%, ou au moins 85%, ou au moins 90%, ou au moins 92,5%, ou au moins 95%, ou au moins 97,5%, ou au moins 98%, ou au moins 98,5%, ou au moins 99%, ou au moins 99,5% en poids de PAEK par rapport au poids total de poudre.

13. Procédé de fabrication selon l'une quelconque des revendications 1 à 12, dans lequel la proportion en ledit au moins un phosphate dans ladite poudre est supérieure ou égale à 1500 ppm, ou supérieure ou égale à 2000 ppm, ou supérieure ou égale à 2500 ppm.

14. Procédé de fabrication selon l'une quelconque des revendications 1 à 13, dans lequel ledit au moins un PAEK est choisi parmi le groupe constitué de : poly-éther-cétone-cétone, PEKK, poly-éther-éther-cétone, PEEK, poly-éther-éther-cétone-cétone, PEEKK, poly-éther-cétone-éther-cétone-cétone, PEKEKK, poly-éther-éther-éther-cétone, PEEEK, polyéther-diphényl-éther-cétone, PEDEK, leurs copolymères et leurs mélanges.

15. Procédé de fabrication selon la revendication 14, dans lequel ledit au moins un PAEK est du poly-éther-cétone-cétone, PEKK.

16. Procédé de fabrication selon la revendication 15, dans lequel ladite poudre comprend au moins deux PAEK, plus particulièrement du PEKK, et en plus du PEKK, l'un au moins des polymères suivants : PEK, PEEKEK, PEEK, PEEKK, PEKEKK, PEEEK, PEDEK, avec une teneur de moins de 50% en poids du poids total de ladite composition, de préférence inférieure ou égale à 30% massique de la composition.

17. Procédé de fabrication selon l'une quelconque des revendications 1 à 16, dans lequel une poudre vierge, n'ayant jamais été recyclée et apte à être recyclée, est obtenue par malaxage à sec ou par imprégnation humide, préférentiellement par imprégnation humide, d'une composition dépourvue de phosphate comprenant au moins 50% en poids par rapport au poids total de composition avec ledit/lesdits phosphate(s).

18. Article tridimensionnel susceptible d'être obtenu à partir d'un procédé selon l'une quelconque des revendications 1 à 17.

19. Utilisation de phosphate(s) dans une composition à base de PAEK(s), comprenant au moins 50% en poids par rapport au poids total de poudre d'au moins un PAEK, le(s) phosphate(s) étant en proportion d'au moins 1000 ppm dans la composition, pour stabiliser la couleur de la composition lorsque cette dernière est chauffée à une température strictement comprise entre la température de transition vitreuse et la température de fusion de la composition.

20. Utilisation de phosphate(s) dans une composition à base de PAEK(s), comprenant au moins 50% en poids par rapport au poids total de poudre d'au moins un PAEK, le(s) phosphate(s) étant en proportion d'au moins 1000 ppm dans la composition, pour stabiliser la masse moléculaire moyenne du (des) PAEK(s) de la composition, lorsque cette dernière est chauffée à une température strictement comprise entre la température de transition vitreuse et la température de fusion de la composition.

## Patentansprüche

1. Verfahren zur schichtweisen Herstellung eines dreidimensionalen Gegenstands durch Sintern eines Pulvers auf Basis von Polyaryletherketonen, PAEKs, durch eine elektromagnetische Strahlung, wobei
das Pulver mindestens 50 Gew.-% bezogen auf das Pulvergesamtgewicht mindestens eines PAEK und mindestens ein Phosphat umfasst, wobei das Pulver mindestens teilweise ein recyceltes Pulver ist;
der Anteil an dem mindestens einen Phosphat in dem Pulver größer als oder gleich 1000 ppm ist;
wobei das recycelte Pulver geeignet ist, durch, kontinuierliches oder nicht kontinuierliches, Erhitzen eines Pulvers mit derselben Zusammensetzung während einer Dauer von mindestens sechs Stunden auf eine, konstante oder nicht konstante, Temperatur, die strikt zwischen der Glasübergangtemperatur, Tg, und der Schmelztemperatur, Tf, des Pulvers liegt, erhalten zu werden.

2. Verfahren zur Herstellung nach Anspruch 1, wobei das recycelte Pulver ein Pulver ist, das geeignet ist, aus mindestens einem vorhergehenden schichtweisen Aufbau eines dreidimensionalen Gegenstands durch Sintern eines Pulvers durch eine elektromagnetische Strahlung herzurühren, wobei das Sintern der Schichten des vorhergehenden Aufbaus bei einer Aufbautemperatur Tc erfolgt.

3. Verfahren zur Herstellung nach Anspruch 2, wobei mindestens ein Teil des recycelten Pulvers mindestens zwei Mal oder mindestens drei Mal oder mindestens fünf Mal oder mindestens zehn Mal oder mindestens fünfundzwanzig Mal oder mindestens fünfzig Mal oder mindestens hundert Mal in mindestens einem vorhergehenden schichtweisen Aufbau von dreidimensionalen Gegenständen durch Sintern eines Pulvers durch eine elektromagnetische Strahlung recycelt worden ist.

4. Verfahren zur Herstellung nach einem der Ansprüche 2 und 3, wobei Tc zwischen (Tf-50) °C und (Tf-10) °C einschließlich der Grenzwerte liegt; oder,
Tc zwischen (Tg+20) °C und (Tg+70) °C einschließlich der Grenzwerte liegt.

5. Verfahren zur Herstellung nach Anspruch 4, wobei das Pulver, das geeignet ist, von mindestens einem vorhergehenden schichtweisen Aufbau eines dreidimensionalen Gegenstands durch Sintern eines Pulvers durch eine elektromagnetische Strahlung herzurühren, einer Temperatur unterzogen worden ist, die während der Aufbauzeit des vorhergehenden Aufbaus von der Aufbautemperatur Tc bis zu einer Behälterbodentemperatur Tb variiert,
wobei die Behälterbodentemperatur Tb größer oder gleich (Tc-40) °C, bevorzugt größer oder gleich (Tc-25) °C und noch bevorzugter größer oder gleich (Tc-10) °C ist.

6. Verfahren zur Herstellung nach einem der Ansprüche 1 bis 5, wobei das Pulver in Bezug auf das Pulvergesamtgewicht mindestens 30 %, bevorzugt mindestens 40 % und besonders bevorzugt mindestens 50 % recyceltes Pulver umfasst.

7. Verfahren zur Herstellung nach einem der Ansprüche 1 bis 6, wobei das mindestens eine Phosphat ein Salz ist.

8. Verfahren zur Herstellungsverfahren nach Anspruch 7, wobei das Phosphatsalz aus der Gruppe bestehend aus: Ammonium-, Natrium-, Calcium-, Zink-, Kalium-, Aluminium-, Magnesium-, Zirconium-, Barium-, Lithium-, Seltene-Erden-Phosphatsalzen, und ihrer Mischung ausgewählt ist.

9. Verfahren zur Herstellung nach Anspruch 8, wobei das Phosphatsalz die folgende Formel aufweist: 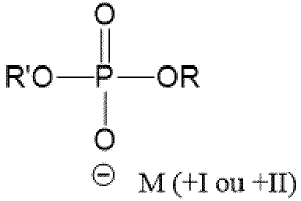 in der R von R' verschieden ist oder nicht, wobei R und R' durch eine oder mehrere aromatische Gruppen gebildet werden, die durch eine oder mehrere Gruppen mit 1 bis 9 Kohlenstoffen substituiert sind oder nicht, wobei R und R' direkt untereinander gebunden oder durch mindestens eine Gruppe, die aus den folgenden Gruppen ausgewählt ist, getrennt sein können: -CH₂-; -C(CH₃)₂-; -C(CF₃)₂-; - SO₂-; -S-, -CO-; und -O- und wobei M für ein Element der Gruppe IA oder IIA des Periodensystems steht.

10. Verfahren zur Herstellung nach einem der Ansprüche 7 und 8, wobei das Phosphatsalz ein Salz von H₂PO₄⁻, HPO₄²⁻, PO₄³⁻ oder ihre Mischung ist, das bevorzugt als Gegenion ein Natriumion, ein Kaliumion oder ein Calciumion hat.

11. Verfahren zur Herstellung nach Anspruch 7, wobei das Phosphatsalz das Natriumdihydrogenphosphat ist.

12. Verfahren zur Herstellung nach einem der Ansprüche 1 bis 11, wobei das Pulver mindestens 75 Gew.-% oder mindestens 80 Gew.-% oder mindestens 85 Gew.-% oder mindestens 90 Gew.-% oder mindestens 92,5 Gew.-% oder mindestens 95 Gew.-% oder mindestens 97,5 Gew.-% oder mindestens 98 Gew.-% oder mindestens 98,5 Gew.-% oder mindestens 99 Gew.-% oder mindestens 99,5 Gew.-% PAEK bezogen auf das Pulvergesamtgewicht umfasst.

13. Verfahren zur Herstellung nach einem der Ansprüche 1 bis 12, wobei der Anteil des mindestens einen Phosphats in dem Pulver größer als oder gleich 1500 ppm oder größer als oder gleich 2000 ppm oder größer als oder gleich 2500 ppm ist.

14. Verfahren zur Herstellung nach einem der Ansprüche 1 bis 13, wobei das mindestens eine PAEK aus der Gruppe ausgewählt ist, die aus Polyetherketonketon, PEKK, Polyetheretherketon, PEEK, Polyetheretherketonketon, PEEKK, Polyetherketonetherketonketon, PEKEKK, Polyetheretheretherketon, PEEEK, Polyetherdiphenyletherketon, PEDEK, ihren Copolymeren und ihren Mischungen besteht.

15. Verfahren zur Herstellung nach Anspruch 14, wobei das mindestens eine PAEK Polyetherketonketon, PEKK, ist.

16. Verfahren zur Herstellung nach Anspruch 15, wobei das Pulver mindestens zwei PAEK umfasst, insbesondere PEKK, und zusätzlich zum PEKK mindestens eines der folgenden Polymere: PEK, PEEKEK, PEEK, PEEKK, PEKEKK, PEEEK, PEDEK, mit einem Gehalt von weniger als 50 Gew.-% vom Gesamtgewicht der Zusammensetzung, bevorzugt kleiner als oder gleich 30 Masse-% der Zusammensetzung.

17. Verfahren zur Herstellung nach einem der Ansprüche 1 bis 16, wobei ein frisches Pulver, das nie recycelt worden ist und geeignet ist, recycelt zu werden, durch Trockenmischen oder durch Feuchtimprägnieren, bevorzugt durch Feuchtimprägnieren, einer phosphatfreien Zusammensetzung erhalten wird, die mindestens 50 Gew.-% bezogen auf das Zusammensetzungsgesamtgewicht mit dem/den Phosphat(en) umfasst.

18. Dreidimensionaler Artikel, der geeignet ist, mit einem Verfahren nach einem der Ansprüche 1 bis 17 erhalten zu werden.

19. Verwendung von Phosphat(en) in einer Zusammensetzung auf Basis von PAEK(s), umfassend mindestens 50 Gew.-% bezogen auf das Pulvergesamtgewicht mindestens eines PAEK, wobei das(die) Phosphate(e) in einem Anteil von mindestens 1000 ppm in der Zusammensetzung vorliegen, um die Farbe der Zusammensetzung zu stabilisieren, wenn Letztere auf eine Temperatur strikt zwischen der Glasübergangstemperatur und der Schmelztemperatur der Zusammensetzung erhitzt wird.

20. Verwendung von Phosphat(en) in einer Zusammensetzung auf Basis von PAEK(s), umfassend mindestens 50 Gew.-% bezogen auf das Pulvergesamtgewicht mindestens eines PAEK, wobei das(die) Phosphate(e) in einem Anteil von mindestens 1000 ppm in der Zusammensetzung vorliegen, um die mittlere Molekularmasse des(der) PAEK(s) der Zusammensetzung zu stabilisieren, wenn Letztere auf eine Temperatur strikt zwischen der Glasübergangstemperatur und der Schmelztemperatur der Zusammensetzung erhitzt wird.

## Claims

1. Process for the layer-by-layer manufacture of a three-dimensional object by sintering of a powder based on polyaryletherketones, PAEKs, with electromagnetic radiation, wherein
said powder comprises at least 50% by weight, relative to the total weight of powder, of at least one PAEK and at least one phosphate, said powder being, at least in part, a recycled powder;
the proportion of said at least one phosphate in said powder being greater than or equal to 1000 ppm;
said recycled powder being capable of being obtained by continuous or discontinuous heating, over a period of at least six hours, of a powder of the same composition at a constant or nonconstant temperature, strictly between the glass transition temperature, Tg, and the melting temperature, Tm, of the powder.

2. Manufacturing process according to Claim 1, wherein the recycled powder is a powder capable of originating from at least one previous layer-by-layer construction of a three-dimensional object by powder sintering with electromagnetic radiation, the sintering of the layers of the previous construction being carried out at a construction temperature Tc.

3. Manufacturing process according to Claim 2, wherein at least one portion of the recycled powder has been recycled at least two times, or at least three times, or at least five times, or at least ten times, or at least twenty-five times, or at least fifty times, or at least one hundred times, in at least one previous layer-by-layer construction of three-dimensional objects by powder sintering with electromagnetic radiation.

4. Manufacturing process according to either one of Claims 2 and 3, wherein Tc is between (Tm-50)°C and (Tm-10) °C, limits included; or,
Tc is between (Tg+20)°C and (Tg+70)°C, limits included.

5. Manufacturing process according to Claim 4, wherein powder capable of originating from at least one previous layer-by-layer construction of a three-dimensional object by powder sintering with electromagnetic radiation, has been subjected to a temperature varying from the construction temperature Tc to a tank bottom temperature Tb, during the construction period of the previous construction,
the tank bottom temperature Tb being greater than or equal to (Tc-40)°C, preferentially greater than or equal to (Tc-25)°C, and more preferably greater than or equal to (Tc-10)°C.

6. Manufacturing process according to any one of Claims 1 to 5, wherein said powder comprises, by total weight of powder, at least 30%, preferentially at least 40%, and very preferentially at least 50% of recycled powder.

7. Manufacturing process according to any one of Claims 1 to 6, wherein said at least one phosphate is a salt.

8. Manufacturing process according to Claim 7, wherein said phosphate salt is selected from the group consisting of: phosphate salts of ammonium, sodium, calcium, zinc, potassium, aluminium, magnesium, zirconium, barium, lithium, rare-earth elements, and a mixture thereof.

9. Manufacturing process according to Claim 8, wherein said phosphate salt has the following formula: 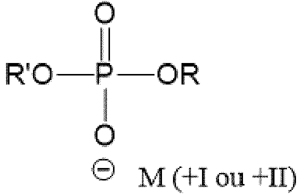 wherein R is identical to or different from R', R and R' being formed by one or more aromatic groups which are optionally substituted by one or more groups having from 1 to 9 carbons, it being possible for R and R' to be directly bonded to one another or separated by at least one group chosen from the following groups: -CH₂-; - C(CH₃)₂-; -C(CF₃)₂-; -SO₂-; -S-, -CO-; and -0- and, wherein M represents an element from group IA or IIA of the Periodic Table.

10. Manufacturing process according to either one of Claims 7 and 8, wherein said phosphate salt is a salt of H₂PO₄⁻, HPO₄²⁻, PO₄³⁻, or a mixture thereof, preferentially having a sodium ion, a potassium ion or a calcium ion as counterion.

11. Manufacturing process according to Claim 7, wherein said phosphate salt is monosodium phosphate.

12. Manufacturing process according to any one of Claims 1 to 11, wherein said powder comprises at least 75%, or at least 80%, or at least 85%, or at least 90%, or at least 92.5%, or at least 95%, or at least 97.5%, or at least 98%, or at least 98.5%, or at least 99%, or at least 99.5%, by weight of PAEK relative to the total weight of powder.

13. Manufacturing process according to any one of Claims 1 to 12, wherein the proportion of said at least one phosphate in said powder is greater than or equal to 1500 ppm, or greater than or equal to 2000 ppm, or greater than or equal to 2500 ppm.

14. Manufacturing process according to any one of Claims 1 to 13, wherein said at least one PAEK is selected from the group consisting of: polyetherketoneketone, PEKK, polyetheretherketone, PEEK, polyetheretherketoneketone, PEEKK, polyetherketoneetherketoneketone, PEKEKK, polyetheretheretherketone, PEEEK, polyetherdiphenyletherketone, PEDEK, copolymers thereof and mixtures thereof.

15. Manufacturing process according to Claim 14, wherein said at least one PAEK is polyetherketoneketone, PEKK.

16. Manufacturing process according to Claim 15, wherein said powder comprises at least two PAEKs, more particularly PEKK, and in addition to the PEKK, at least one of the following polymers: PEK, PEEKEK, PEEK, PEEKK, PEKEKK, PEEEK, PEDEK, with a content of less than 50% by weight of the total weight of said composition, preferably less than or equal to 30% by weight of the composition.

17. Manufacturing process according to any one of Claims 1 to 16, wherein a virgin powder, which has never been recycled and is capable of being recycled, is obtained by dry blending or by wet impregnation, preferentially by wet impregnation, of a phosphate-free composition comprising at least 50% by weight relative to the total weight of composition with said phosphate(s).

18. Three-dimensional article capable of being obtained from a process according to any one of Claims 1 to 17.

19. Use of phosphate(s) in a composition based on PAEK(s), comprising at least 50% by weight, relative to the total weight of powder, of at least one PAEK, the phosphate(s) being in a proportion of at least 1000 ppm in the composition, in order to stabilize the colour of the composition when the latter is heated at a temperature strictly between the glass transition temperature and the melting temperature of the composition.

20. Use of phosphate(s) in a composition based on PAEK(s), comprising at least 50% by weight, relative to the total weight of powder, of at least one PAEK, the phosphate(s) being in a proportion of at least 1000 ppm in the composition, in order to stabilize the average molecular mass of the PAEK(s) of the composition, when the latter is heated at a temperature strictly between the glass transition temperature and the melting temperature of the composition.
